# EUROPEAN PATENT SPECIFICATION

(11) **EP 4 238 683 B1**
(45) Date of publication and mention of the grant of the patent: **09.04.2025**
(21) Application number: 23157843.6
(22) Date of filing: 21.02.2023
(51) Int. Cl.: B23K 20/10, B23K 20/26

(54) **QUICK-REPLACE DEVICE AND METHOD FOR WELDING HEAD OF ULTRASONIC METAL WELDING MACHINE**
SCHNELLWECHSELVORRICHTUNG UND -VERFAHREN FÜR DEN SCHWEISSKOPF EINER ULTRASCHALL-METALLSCHWEISSMASCHINE
DISPOSITIF ET PROCÉDÉ DE REMPLACEMENT RAPIDE POUR TÊTE DE SOUDAGE D'UNE MACHINE DE SOUDAGE DE METAL PAR ULTRASONS

(30) Priority: 22.02.2022 CN 202210160112
(43) Date of publication of application: 06.09.2023
(73) Proprietor: Branson Ultraschall Niederlassung der Emerson Technologies GmbH & Co. OHG, 63128 Dietzenbach (DE)
(72) Inventor: KONG, Xiangyu, Shanghai (CN); LIU, Rui, Shanghai (CN)
(74) Representative: HWP Intellectual Property

(56) References cited:
- CN-U- 213 135 413
- CN-U- 214 602 498
- US-A1- 2020 001 391

## Description

### TECHNICAL FIELD

The present application relates to the technical field of ultrasonic metal welding, and more particularly to a quick-replace device and method for welding head of ultrasonic metal welding machine.

### BACKGROUND

The ultrasonic metal welding machine is generally consisted of a framework, an ultrasonic generator and an ultrasonic triplet. The ultrasonic triplet includes a transducer, an amplitude modulator and a welding head. During metal welding, the framework drives the welding head to move to the workpiece to be welded. The ultrasonic triplet converts the electric energy generated by the ultrasonic generator with a certain frequency into the mechanical energy of the same frequency and outputs it through the welding head. High-frequency mechanical vibration is transferred from the welding head to the surface of the workpiece, which causes the friction of the surface of the workpiece to form fusion between the molecular layers, so as to weld the workpiece. Compared with the traditional welding process, ultrasonic welding has the characteristics of fast welding speed, high welding strength, good sealing, low cost, clean and pollution-free, so it is widely used.

At present, when the welding head of the existing ultrasonic metal welding machine is replaced, due to the structural characteristics of the ultrasonic triplet that the overall length is long and the weight is large, the connection and positioning with the framework, as well as the operation space after matching with automatic production line being limited, it is necessary to fix the welding head through a welding head holding device in advance, and then fix the welding head holding device on the framework through multiple bolts to realize the replacement of the welding head.

For the above relevant technologies, due to the heavy weight of the ultrasonic triplet and the welding head holding device, two workers are required to cooperate with each other to disassemble/assemble the welding head, one of the two workers holds the ultrasonic triplet and the other disassembles/assembles it. During the disassembly/assembly process, a force is required to support the ultrasonic triplet. When the disassembly/assembly is performed by a single worker, it is not easy to hold the ultrasonic triplet and thus there is a safety risk of falling of the ultrasonic triplet and the welding head holding device. The inventor believes that there is a defect that it is time-consuming, laborious and not easy to operate for the worker to disassemble/assemble the welding head.
In CN 214602498 U (describing the preamble of claim 1), a triple-group mounting seat fixing device of an ultrasonic welding machine is described. The triplet group mounting seat fixing device comprises a welding machine body and a triplet group mounting seat, the welding machine body is provided with a guide groove extending along the linear direction, the end face of the guide groove is provided with an opening, and the triplet group mounting seat is inserted into the guide groove from the opening. A guide groove is formed in the middle of the three-group mounting base, a guide arm extending towards the direction of the three-group mounting base is arranged on the groove wall of the guide groove, convex blocks are arranged on the two sides of the three-group mounting base, a side face pressing block is arranged in the guide groove, and an operation piece used for pushing the side face pressing block to press the three-group mounting base is arranged on the guide groove.

### SUMMARY

In order to solve the problem that it is time-consuming, laborious and not easy to operate for the worker to disassemble/assemble the welding head, this invention defines a quick-replace device for the welding head of the ultrasonic metal welding machine according to independent claim 1.

This application provides a quick-replace device for the welding head of the ultrasonic metal welding machine, which adopts a technical solution as follows:

A quick-replace device for the welding head of the ultrasonic metal welding machine includes a fixing mechanism for fixedly connecting a framework and a movable mechanism for fixing an ultrasonic triplet including a transducer, an amplitude modulator and a welding head, the movable mechanism being detachably mounted in the fixing mechanism, and including a mounting plate and a connecting assembly for fixing the ultrasonic triplet, the connecting assembly being arranged on the mounting plate; the fixing mechanism including a fixing block for a fixed
connection to the framework, a mounting groove being defined in the fixing block with at least one side thereof being open and extending in use in a direction perpendicular to the framework, the mounting plate being slidably mounted in the mounting groove, and an abutting block for fixing the mounting plate being mounted in the fixing block. A positioning block is detachably mounted on the fixing block in a direction perpendicular to the sliding direction of the mounting plate and abuts against the mounting plate in a direction perpendicular to the adjusting direction of the abutting block.

By adopting the above technical solution, during assembly of the welding head, firstly the ultrasonic triplet is mounted to the connecting assembly, and then the mounting plate slides into the mounting groove of the fixing block via its open side. At this time, the mounting groove of the fixing block supports the mounting plate, and the assembly of the welding head is then completed by using the abutting block to fix the mounting plate. During disassembly of the welding head, firstly the abutting block is adjusted to release the fixed state with the mounting plate. At this time, the mounting groove of the fixing block supports the mounting plate, and the
ultrasonic triplet is not easy to fall. Then the mounting plate slides out of the mounting groove to complete the disassembly of the welding head. In this way, by means of providing support to the mounting plate through the mounting groove, a single worker can replace the welding head, and is not easy to occur the safety risk of falling of the ultrasonic triplet. The welding head holding device is consisted of two parts, i.e., the fixing mechanism and the movable mechanism. During replacement of the welding head, only the movable mechanism needs to be disassembled and assembled, which reduces the overall weight of the parts that need to be replaced, so that replacement of the welding head is time-saving and labor-saving, and the operation is more convenient and fast.

In some embodiments, two sides of the mounting plate along its sliding direction are provided with two position limiting bars, a first limiting groove communicating with the mounting groove is defined in the fixing block, a chamfer is formed at an end of the abutting block close to the mounting plate and cooperates with a bottom of the mounting groove to form a second limiting groove, and the two position limiting bars are slidably mounted in the first limiting groove and second limiting groove along the sliding direction of the mounting plate, respectively.

By adopting the above technical solution, during assembly of the mounting plate, the mounting plate is slidably mounted into the mounting groove. In this time, the position limiting bars at two sides of the mounting plate are in the first limiting groove and second limiting groove, respectively. The cooperation of the position limiting bars with the first and second limiting grooves on the one hand realizes the support of the mounting groove to the mounting plate, and on the other hand realizes the guiding function to the mounting plate, facilitating the sliding installation of the mounting plate.

In some embodiments, an end of the abutting block away from the mounting plate is provided with an adjusting member for adjusting a position of the abutting block, and the fixing the adjusting member is provided with a fastener for fixing itself.

By adopting the above technical solution, the adjusting member is used to adjust the position of the abutting block, so that the abutting block slides in the fixing block to make the chamfer of the abutting block abut against the position limiting bar of the mounting plate, thereby fixing the mounting plate. The fasteners are used to fix the adjusting member after adjustment of the abutting block, the abutting block thus can fix the mounting plate more firmly.

In some embodiments, a guiding groove is defined in the fixing block, a guiding block is provided on the abutting block, and the guide block matches with the guiding groove and is slidably mounted in the guiding groove along an adjusting direction of the abutting block.

By adopting the above technical solution, during the sliding of the abutting block to fix the mounting plate, the guiding block on the abutting block slides in the guiding groove to guide and limit the sliding direction of the abutting block, making the sliding of the abutting block more stable.

According to the invention, a positioning block is detachably mounted on the fixing block and abuts against the mounting plate in a direction perpendicular to the adjusting direction of the abutting block.

By adopting the above technical solution, the positioning block is mounted on the fixing block after the mounting plate is assembled. The positioning block is pressed against the mounting plate and cooperates with the framework to limit the sliding direction of the mounting plate, so as to further fix the mounting plate. Similarly, during removing the mounting plate, the positioning block needs to be removed firstly.

In some embodiments, the connecting assembly includes a clamping jaw for fixing the welding head and a clamping member for fixing the amplitude modulator, and the clamping member is mounted on the mounting plate and adjustable along an axis direction of the ultrasonic triplet.

By adopting the above technical solution, it is necessary to pre-assemble the ultrasonic triplet to the connecting assembly when the welding head is assembled. The clamping claw is used to clamp and fix the welding head, and the clamping member is used to clamp and fix the amplitude modulator to complete the assembly of the ultrasonic triplet. The clamping member can be adjusted to make the connecting assembly suitable for ultrasonic triplets of different sizes and specifications.

In some embodiments, the clamping member includes a connecting rod and a hose clamp, the connecting rod is slidably mounted on the mounting plate along the axis direction of the ultrasonic triplet, the hose clamp is mounted at an end of the connecting rod away from the mounting plate for fixing the amplitude modulator, and a fixture for fixing the connecting rod is mounted on the mounting plate.

By adopting the above technical solution, during adjusting the clamping member, the connecting rod slides to drive the hose clamp to slide. When the hose clamp slides to a position where the amplitude modulator is placed, fixtures are used to fix the connecting rod, and the hose clamp is used to clamp and fix the amplitude modulator. For the sliding of the connecting rod, the adjustment of the clamping member is more convenient and fast.

In some embodiments, a position limiting groove is defined in the mounting plate along a sliding direction of the connecting rod, and the connecting rod matched with and is slidably mounted in the position limiting groove.

By adopting the above technical solution, the connecting rod slides in the position limiting groove of the mounting plate, which generates a position limit effect to the connecting rod and makes the sliding of the connecting rod more stable.

In some embodiments, a position plate for facilitating positioning of the welding head during assembly of the welding head is provided on the mounting plate.

By adopting the above technical solution, during assembly of the welding head, the position plate is arranged on the mounting plate for positioning the welding head, which makes the position of the welding head during assembly more accurate.

In some embodiments, a position limiting slot is defined in a side wall of the mounting plate close to the position plate, and a position limiting bar is provided on a side wall of the position plate close to the mounting plate, and the position limiting bar matches with and is engaged in the position limiting slot.

By adopting the above technical solution, during assembly of the position plate, the position limiting bar engages into the position limiting slot to limit the position of the position plate, which makes the position plate more stable. At the same time, the welding head engages into the position limiting slot to position the welding head quickly, thereby the welding head being perpendicular to the mounting head, improving the stability of the welding head during the welding process.

In summary, the embodiments of this application has at least one of the following beneficial effects:
1. By means of the mounting plate and mounting groove, the mounting groove supports the mounting plate during the disassembly and assembly of the welding head, so that the welding head can be replaced by a single worker, and the safety risk of falling of the ultrasonic triplet is not easy to occur, thereby replacement of the welding head is time-saving and labor-saving, and the operation is more convenient and fast;
2. By means of the guiding block and guiding groove, the sliding of the abutting block is guided and limited, and thus the sliding of the abutting block is more stable;
3. By means of the position plate, the welding head is positioned quickly and is maintained to be perpendicular to the mounting plate, which is benefit to improve the stability of the metal welding machine.

In order to solve the problem that it is time-consuming, laborious and not easy to operate for assembly/disassembling the welding head, the invention further defines a quick-replace method for welding head of ultrasonic metal welding machine according to independent claim 10, which is implemented by the above quick-replace device for welding head of ultrasonic metal welding machine, wherein the method includes the following steps:
S11, connecting a welding head to be assembled to the mounting plate of the movable mechanism;
S12, mounting the mounting plate into the mounting groove of the fixing block of the fixing mechanism along a first direction; and
S13, moving the abutting block along a second direction to fix the mounting plate in the mounting groove, wherein the second direction and the first direction form an angle with each other.
Further, the method includes the steps of providing a positioning block and connecting the positioning block to the open side of the mounting groove of the fixing block after step S13, so as to limit the movement of the mounting plate along the fourth direction; and removing the positioning block which is connected to the open side of the mounting groove of the fixing block before step S01.

By adopting the above technical solution, during assembly of the welding head, firstly the ultrasonic triplet is mounted to the mounting plate, and then the mounting plate slides into the mounting groove of the fixing block via its open side. At this time, the mounting groove of the fixing block supports the mounting plate, and the assembly of the welding head is then completed by using the abutting block to fix the mounting plate. The whole assembly process can be completed by a single works, and the safety risk of falling of the ultrasonic triplet can be avoided.

In some embodiments, the method further includes disassembling a welding head to be replaced before step S11, which includes the following steps:
S01, moving the abutting block along a third direction to loosen the mounting plate which is fixed in the mounting groove by the abutting block, wherein the third direction is opposite to the second direction;
S02, withdrawing the mounting plate from the mounting groove along a fourth direction, wherein the fourth direction is opposite to the first direction; and
S03, removing the welding head to be replaced from the mounting plate to which it is connected.

By adopting the above technical solution, during disassembly of the welding head, firstly the abutting block is adjusted to release the fixed state with the mounting plate. At this time, the mounting groove of the fixing block supports the mounting plate, and the ultrasonic triplet is not prone to the safety risk of falling, and then the mounting plate slides out of the mounting groove to complete the disassembly of the welding head. The whole disassembly process can be completed by a single worker, and the safety risk of falling of the ultrasonic triplet can be avoided.

According to the invention, the method further includes: providing a positioning block and connecting the positioning block to the open side of the mounting groove of the fixing block after step S13, so as to limit the movement of the mounting plate along the fourth direction; and removing the positioning block which is connected to the open side of the mounting groove of the fixing block before step S01.

By adopting the above technical solution, the positioning block is mounted onto the fixing block to limit the sliding of the mounting plate after the assembly of the mounting plate is finished, so as to further fix the mounting plate. Similarly, during disassembly of the mounting plate, it is necessary to remove the positioning block firstly.

In some embodiments, the step S11 includes: providing a position plate with a latching slot and connecting the position plate to the mounting plate detachably; docking the welding head to be assembled with the latching slot for positioning, so that the welding head is perpendicular to the mounting plate; clamping the welding head through the connecting assembly and moving relative to the mounting plate until the connecting assembly contacts with the position plate; fixing the connecting assembly to the mounting plate; and removing the position plate from the mounting plate.

By adopting the above technical solution, during assembly of the welding head, the position plate is mounted onto the mounting plate for positing the welding head, making the positioning of the welding head more convenient and accurate during installation.

In some embodiments, the first direction and the second direction are perpendicular to each other, and contact surfaces of the abutting block and the mounting plate are inclined to a certain angle with respect to the first direction and the second direction.

By adopting the above technical solution, during assembly of the welding head, the sliding direction of the mounting plate is different from the sliding direction of the abutting block, and the mounting plate and abutting block can be positioned by the inclined contact surfaces, thereby the mounting plate being better fixed in the mounting groove.

### BRIEF DESCRIPTION OF THE DRAWINGS

Fig. 1 is a schematic view showing a connection relationship of a quick-replace device for welding head according to a first embodiment of the present application with a framework and an ultrasonic triplet.
Fig. 2 is a schematic view of the quick-replace device for welding head according to the first embodiment of the present application.
Fig. 3 is a partial structural view of the first embodiment of the present application for highlighting a fixing mechanism.
Fig. 4 is a partial structural view of the first embodiment of the present application for highlighting a guiding groove and a guiding block.
Fig. 5 is an exploded, partial structural view of the first embodiment of the present application for highlighting a movable mechanism.
Fig. 6 is an exploded, partial structural view of the first embodiment of the present application for highlighting a position plate.
Fig. 7 is a schematic view of the quick-replace device for welding head according to a second embodiment of the present application.
Fig. 8 is a flowchart of a quick-replace method for welding head according to an embodiment of the present application.

### List of reference numerals:

- 1: fixing mechanism
- 11: fixing block
- 2: movable mechanism
- 21: mounting plate
- 22: connecting assembly
- 221: clamping jaw
- 222: clamping member
- 2221: connecting rod
- 2222: hose clamp
- 3: mounting groove
- 4: abutting block
- 5: position limiting bar
- 6: first limiting groove
- 7: chamfer
- 8: second limiting groove
- 9: adjusting member
- 10: fastener
- 12: guiding groove
- 13: guiding block
- 14: positioning block
- 15: position plate
- 16: position limiting slot
- 17: position limiting bar
- 18: fixture
- 19: position limiting groove
- 23: framework
- 24: transducer
- 25: amplitude modulator
- 26: welding head
- 27: latching slot
- 28: first mounting hole
- 29: second mounting hole
- 30: connecting block
- 31: connecting plate
- 32: sliding groove

### DESCRIPTION OF THE EMBODIMENTS

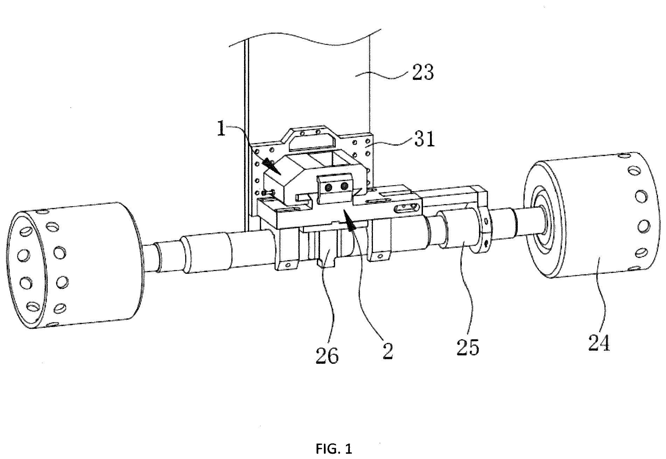

Detailed description to the present application will be given below with reference to Figs. 1-7.

Embodiments of the present application disclose a quick-replace device for welding head of ultrasonic metal welding machine.

### 1^{st} Embodiment

Referring to Fig. 1, the quick-replace device for welding head of ultrasonic metal welding machine includes a fixing mechanism 1 and a movable mechanism 2. The fixing mechanism 1 is fixed to a side wall of a framework 23 through a connecting plate 31, and the fixing mechanism 1 is integrally formed with the connecting plate 31. The movable mechanism 2 is used to fix the ultrasonic triplet, which includes a transducer 24, an amplitude modulator 25 and a welding head 26. The movable mechanism 2 is detachably mounted in the fixing mechanism 1. During replacing the welding head 26, the welding head 26 can be removed when the movable mechanism 2 is detached from the fixing mechanism 1, and the welding head 26 is installed when the movable mechanism 2 is mounted in the fixing mechanism 1. The welding head holding device is consisted of two separate parts, i.e., the fixing mechanism 1 and the movable mechanism 2, only the movable mechanism 2 needs to be disassembled and assembled for replacing the welding head 26, which reduces the overall weight of the part to be replaced and makes the replacement of the welding head 26 more labor-saving.

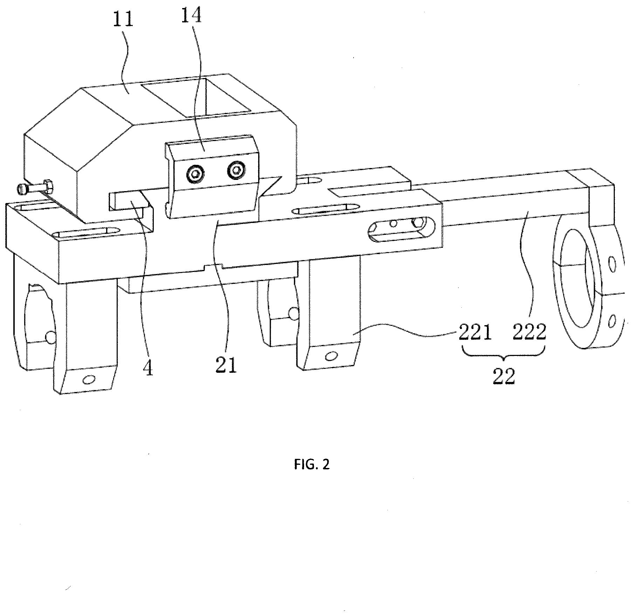

Referring to Fig. 2, the fixing mechanism 1 includes a fixing block 11, which is fixedly mounted onto the side wall of the framework 23. The fixing block 11 defines a mounting groove 3 which extends along a direction perpendicular to the framework 23. Both ends of the mounting groove 3 are open, and one of the open ends of the mounting groove 3 close to the framework 23 abuts against the framework 23. The movable mechanism 2 includes a mounting plate 21 and a connecting assembly 22. The mounting plate 21 is slidably mounted into the mounting groove 3 along the direction perpendicular to framework 23. The connecting assembly 22 is used to fix the ultrasonic triplet, and is fixedly mounted at an end of the mounting plate 21 away from the fixing block 11. An abutting block 4 is slidably mounted into the fixing block 11 along a direction perpendicular to the sliding direction of the mounting plate 21, and abuts against the mounting plate 21. A positioning block 14 which is generally C-shaped is detachably mounted to a side wall of the fixing block 11 away from the framework 23 by bolts. One end face of the positioning block 14 abuts against the fixing block 11, and the other end face of the positioning block 14 abuts against the mounting plate 21. By means of sliding the mounting plate 21 into the mounting groove 3 of the fixing block 11, the movable mechanism 2 is mounted into the fixing mechanism 1. After the assembly of the mounting plate 21, the abutting block 4 cooperates with the mounting groove 3 to fix the mounting plate 21 in a direction perpendicular to the sliding direction of the mounting plate 21, and the positioning block 14 cooperates with the framework 23 to fix the mounting plate 21 in the sliding direction of the mounting plate 21.

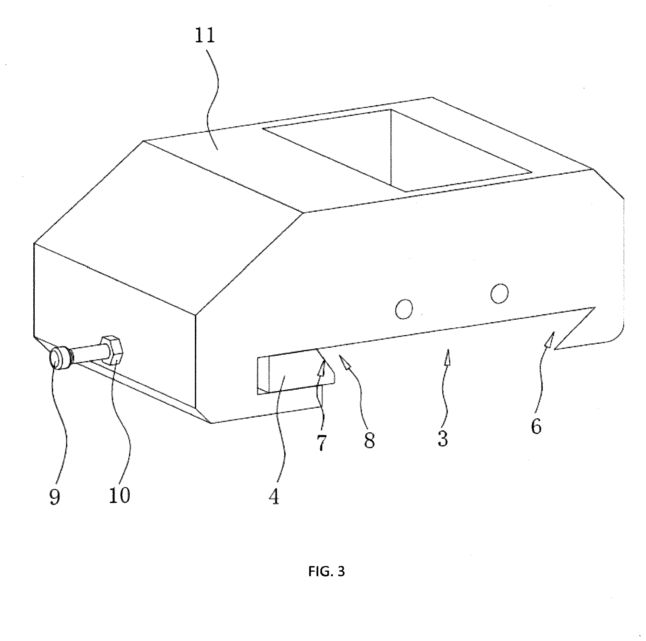

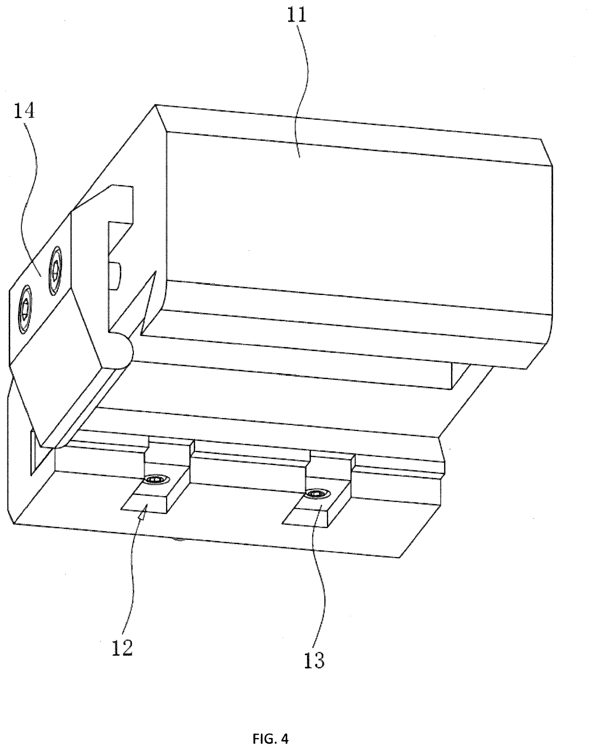

Referring to Fig. 3 and Fig. 4, an adjusting member 9 is screwed in the fixing block 11. The adjusting member 9 extends through the fixing block 11 and then threaded into the abutting block 4. A fastener 10 is mounted around and screwed on the adjusting member 9, and abuts against an outer sidewall of the fixing block 11. In this application, the adjusting member 9 may be a differential screw, and the fastener 10 may be a nut. Two guiding grooves 12 are defined in the fixing block 11 along the sliding direction of the block 4, two guiding blocks 13 are fixedly mounted to a side wall of the block 4 close to the guide grooves 12 by bolts, and the guiding blocks 13 are slidably engaged into the guide grooves 12 along the sliding direction of the abutting block 4. During fixing the mounting plate 21, the adjusting member 9 is rotated to drive the abutting block 4 to move. The guiding blocks 13 cooperate with the guide grooves 12 to make the movement of the abutting block 4 more stable. When the abutting block 4 moves to abut against the mounting plate 21, the fastener 10 is rotated to fix the adjusting member 9 to make the abutting block 4 be fixed more stable.

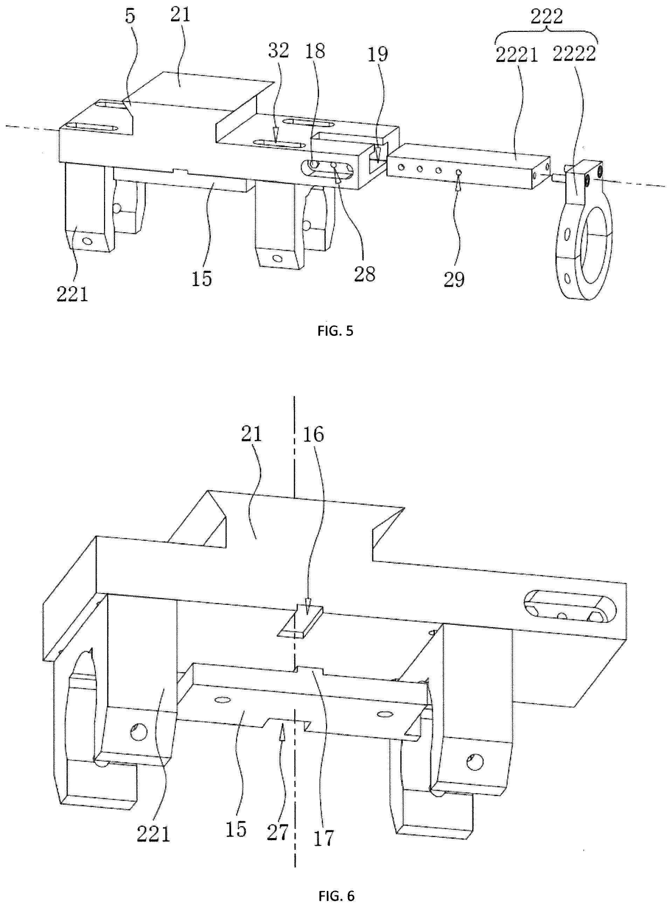

Referring to Fig. 3 and Fig.5, two side walls of the mounting plate 21 are respectively provided with a position limiting bar 5 at an end thereof close to the fixing block 11. The position limiting bar 5 is fixed to the sidewall, and extends along the sliding direction of the mounting plate 21. A cross section of the position limiting bar 5 is generally triangular-shaped, and a width of the cross section gradually increases from bottom to top. A first limiting groove 6 is defined in an end of the fixing block 11 away from the abutting block 4, and communicates with the mounting groove 3. A chamfer 7 is formed on the abutting block 4, which cooperates with a bottom wall of the mounting groove 3 to form a second limiting groove 8. Cross sections of the first limiting groove 6 and second limiting groove 8 are the same as the cross section of the position limiting bar 5, and an adjustment range of the abutting block 4 is less than the maximum width of the cross section of the position limiting bar 5. The two position limiting bars 5 are slidably mounted into the first limiting groove 6 and second limiting groove 8 along the sliding direction of the mounting plate 21, respectively. When the welding head 26 needs to be detached, firstly the positioning block 14 is detached, and then the adjusting member 9 is rotated to release the fixed state between the abutting block 4 and mounting plate 21. At this time, the mounting plate 21 is snapped in the first limiting groove 6 and second limiting groove 8 of the mounting groove 3 through the position limiting bars 5. The mounting groove 3 provides a support to the mounting plate 21, which makes the mounting plate 21 not easy to have a safety risk of falling of the ultrasonic triplet during the disassembly of the welding head 26 by the workers, and thus a single worker can disassemble the welding head 26 by himself. The steps of assembly of the welding head 26 are opposite to the above steps, and a single worker can also assemble the welding head 26 by himself. Therefore, the replacement of the welding head 26 is time-saving and labor-saving, and is more convenient and fast.

Referring to Fig. 5, the connection assembly 22 includes two clamping jaws 221 and a clamping member 222, wherein the clamping jaws 221 are used to fixedly clamp the welding head 26, and the clamping member 222 is used to fixedly clamp the amplitude modulator 25. Four sliding grooves 32 are defined in the mounting plate 21 and extend along the axial direction of the ultrasonic triplet. The two clamping jaws 221 are fixed to a side wall of the mounting plate 21 away from the fixing block 11 by bolts. The bolts are slidably mounted in the sliding grooves 32, and the two clamping jaws 221 are provided with threaded holes. When the clamping jaws 221 clamp the welding head 26, the bolts extend through the threaded holes to fix the welding head 26.

The clamping member 222 is mounted to a side wall of the mounting plate 21, and is capable of being adjusted along the axis direction of the ultrasonic triplet. The clamping member 222 includes a connecting rod 2221 and a hose clamp 2222. A position limiting groove 19 is defined in the mounting plate 21, and the connecting rod 2221 slides into the position limiting groove 19 of the mounting plate 21 along the axis direction of the ultrasonic triplet. The hose clamp 2222 is fixed to an end of the connecting rod 2221 away from the mounting plate 21 by bolts, and is perpendicular to the connecting rod 2221 for fixing the amplitude modulator 25. By the means of sliding the connecting rod 2221 in the position limiting groove 19 to drive the hose clamp 2222 to move, the movable mechanism 2 is suitable for ultrasonic triplets of different sizes.

A plurality of second mounting holes 29 are defined in the connecting rod 2221 and evenly spaced from each other along the sliding direction of the connecting rod 2221. Three first mounting holes 28 are defined in the mounting plate 21 and evenly spaced from each other, and communicate with the position limiting groove 19. A fixture 18 is screwed in the first mounting hole 28 of the mounting plate 21. The fixture 18 extends through the first mounting hole 28 and then threads in the second mounting hole 29. Two fixtures 18 are provided and mounted in the first mounting holes 28 at two ends of the connecting rod 2221 in the sliding direction of the connecting rod 2221, respectively. In this application, the fixtures 18 may be bolts. After the connecting rod 2221 slides to adjust positions, it is fixed by the fixtures 18. By means of the two fixtures 18 which are arranged at two ends of the connecting rod 2221 in the sliding direction, the fixing effect of the fixtures 18 is improved.

Referring to Fig. 6, a position plate 15 is detachably connected to a side wall of the mounting plate 21 far away from the fixing block 11 by bolts and located between the two clamping jaws 221. A width of the position plate 15 is about one half of that of the mounting plate 21, and a latching slot 27 is defined in a side wall of the position plate 15 which is close to a middle of the mounting plate 21 in the width direction. The welding head 26 abuts a side wall of the mounting plate 21 close to the position plate 15 and is engaged in the latching slot 27. A position limiting slot 16 is defined in a side wall of the mounting plate 21 close to the position plate 15 and extends along the width direction of the mounting plate 21. A position limiting bar 17 is provided on a side wall of the position plate 15 close to the mounting plate 21 and extends along the width direction of the position plate 15. The position limiting bar 17 is slidably engaged into the position limiting slot 16. During assembly of the welding head 26, firstly the position plate 15 is fix to the mounting plate 21 by bolts, and then the welding head 26 is engaged into the latching slot 27, so as to quickly position the welding head 26 to make it be perpendicular to the mounting plate 21. The clamping jaws 221 clamp the welding head 26 and slide towards the position plate 15. When the clamping jaws 221 abut a side wall of the position plate 15, the bolts are rotated to fix the clamping jaws 221, and at the same time, the welding head 26 in the clamping jaw 221 is fixed by the bolts . After the welding head 26 is assembled, the position plate 15 is removed. By means of using the position plate 15 to pre-position the welding head 26, the positioning of the welding head 26 is more convenient and accurate during installation. At the same time, using the position plate 15 enables the workers with different work experience to assemble the welding head 26 accurately, thereby reducing the assembly difficulty of the welding head 26.

The implementation principle of the first embodiment is as follows: during assembly of the welding head 26, firstly the welding head 26 is mounted in the clamping jaw 221, and then the amplitude modulator 25 is mounted in the holding clamp 2222, thereby finishing pre-assembly of the ultrasonic triplet. The position plate 15 is then mounted to the mounting plate 21 to further fix the welding head 26, and the mounting plate 21 is slidably mounted into the mounting groove 3 of the fixing block 11, so that the position limiting bar 5 slides into the first limiting groove 6 and second limiting groove 8. The adjusting member 9 is then rotated to drive the abutting block 4 to move, so as to fix the mounting plate 21. The fastener 10 is then rotated to fix the adjusting member 9, and finally the positioning block 14 is mounted on the fixing block 11 by bolts to complete the assembly of the welding head 26. Similarly, the welding head 26 can be disassembled by reverse operation according to the above steps. During disassembling the welding head 26, the mounting groove 3 provides a support to the mounting plate 21 through the cooperation of the first limit guide groove 6 and second limit guide groove 8 with the position limiting bar 5, and thus a single worker can replace the welding head 26, and the safety risk of falling of the ultrasonic triplet is not easy to occur, which makes the replacement of the welding head 26 time-saving and labor-saving, and the operation more convenient and fast.

### 2^{nd} Embodiment:

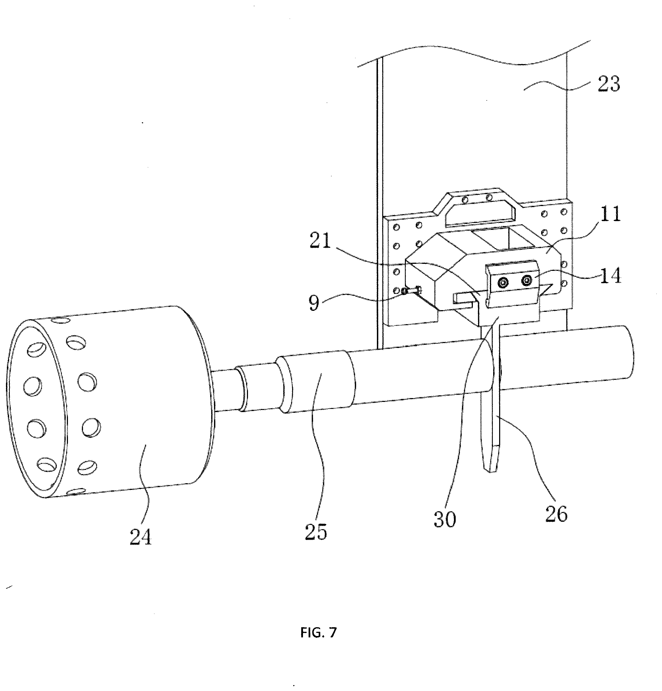

Referring to Fig. 7, the difference between this embodiment and the first embodiment is that: the connecting assembly 22 includes a connecting block 30, one end of which is fixedly connected to the mounting plate 21 and the other end is fixedly connected to the welding head 26. During assembly of the welding head 26, the mounting plate 21 slides directly into the mounting groove 3 to assemble the welding head 26, so that the movable mechanism 2 can be applied to different types of welding heads 26, improving the compatibility of the quick-replace device for welding head of ultrasonic metal welding machine.

The implementation principle of the second embodiment is as follows: during assembly of the welding head 26, the mounting plate 21 slides into the mounting groove 3 of the fixing block 11 to make the position limiting bar 5 slide into the first limit guide groove 6 and second limit guide groove 8, the adjusting member 9 is then rotated to drive the abutting block 4 to move to fix the mounting plate 21, the fastener 10 is then rotated to fix the adjusting member 9, and finally the positioning block 14 is fixed to the fixing block 11 by bolts to complete the assembly of the welding head 26. Similarly, the welding head 26 can be disassembled by reverse operation according to the above steps. During assembly of the welding head 26, the mounting plate 21 slides directly into the mounting groove 3 to assemble the welding head 26, so that the movable mechanism 2 can be applied to different types of welding heads 26, improving the compatibility of the quick-replace device for welding head of ultrasonic metal welding machine.

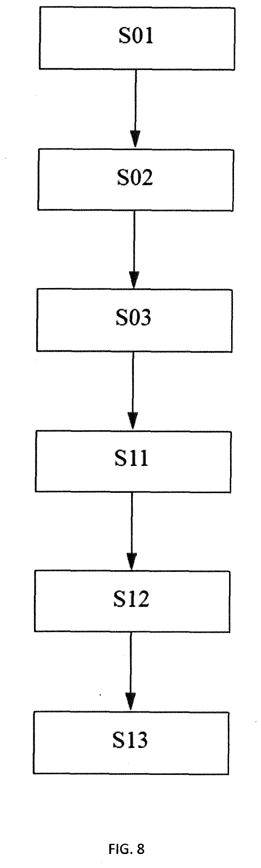

In order to solve the problem that it is time-consuming, laborious and not easy to operate for assembly/disassembling the welding head, the embodiments of the present application further discloses a quick-replace method for welding head of ultrasonic metal welding machine, which is further described in detail with reference to Figs. 1-8 below.

The quick-replace method for welding head of ultrasonic metal welding machine, which is implemented by the quick-replace device for welding head of ultrasonic metal welding machine described above, includes the following steps:
S11, connecting a welding head 26 to be assembled to the mounting plate 21 of the movable mechanism 2;
S12, mounting the mounting plate 21 into the mounting groove 3 of the fixing block 11 of the fixing mechanism 1 along a first direction; and
S13, moving the abutting block 4 along a second direction to fix the mounting plate 21 in the mounting groove 3, wherein the second direction and the first direction form an angle with each other.

Preferably, the first direction and the second direction are perpendicular to each other, and contact surfaces of the abutting block 4 and the mounting plate 21 are inclined to a certain angle, such as 45 degrees, with respect to the first direction and the second direction. During assembly of the welding head 26, the sliding direction of the mounting plate 21 is different from the sliding direction of the abutting block 4, and the mounting plate 21 and abutting block 4 can be positioned by the inclined contact surfaces, thereby the mounting plate 21 can be better fixed in the mounting groove 3.

By adopting the above technical solution, during assembly of the welding head 26, firstly the ultrasonic triplet is mounted to the mounting plate 21, and then the mounting plate 21 slides into the fixing block 11 from the open side of the mounting groove 3. At this time, the mounting groove 3 of the fixing block 11 supports the mounting plate 21, and then the abutting block 4 is used to fix the mounting plate 21, thus assembly of the welding head 26 is completed. The whole assembly process can be completed by a single worker, and it can effectively avoid the safety risk of falling of the ultrasonic triplet.

In some embodiments, the method further comprises disassembling a welding head 26 to be replaced before step S11, and disassembling the welding head 26 to be replaced comprises the following steps:
S01, moving the abutting block 4 along a third direction to loosen the mounting plate 21 which is fixed in the mounting groove 3 by the abutting block 4, wherein the third direction is opposite to the second direction;
S02, withdrawing the mounting plate 21 from the mounting groove 3 along a fourth direction, wherein the fourth direction is opposite to the first direction; and
S03, removing the welding head 26 to be replaced from the mounting plate 21 to which it is connected.

By adopting the above technical solution, during disassembling the welding head 26, firstly the abutting block 4 is adjusted to release the fixed state with the mounting plate 21. At this time, the mounting groove 3 of the fixing block 11 supports the mounting plate 21, and the ultrasonic triplet is not prone to the safety risk of falling, and then the mounting plate 21 slides out of the mounting groove 3 to complete the disassembly of the welding head 26. The whole disassembly process can be completed by a single worker, and it can effectively avoid the safety risk of falling of the ultrasonic triplet.

According to the invention, the method further comprises: providing a positioning block 14 and connecting the positioning block 14 to the open side of the mounting groove 3 of the fixing block 11 after step S13, so as to limit the movement of the mounting plate 21 along the fourth direction; and removing the positioning block 14 which is connected to the open side of the mounting groove 3 of the fixing block 11 before step S01.

By adopting the above technical solution, the positioning block 14 is mounted onto the fixing block 11 to limit the sliding of the mounting plate 21 after the assembly of the mounting plate 21 is finished, so as to further fix the mounting plate 21. Similarly, during disassembly of the mounting plate 21, it is necessary to remove the positioning block 14 firstly.

In some embodiments, the step S11 comprises: providing a position plate 15 with a latching slot 27 and connecting the position plate 15 to the mounting plate 21 detachably; docking the welding head 26 to be assembled with the latching slot 27 for positioning, so that the welding head 26 is perpendicular to the mounting plate 21; clamping the welding head 26 through the connecting assembly 22 and moving relative to the mounting plate 21 until the connecting assembly 22 contacts with the position plate 15; fixing the connecting assembly 22 to the mounting plate 21; and removing the position plate 15 from the mounting plate 21.

By adopting the above technical solution, during assembly of the welding head 26, the position plate 15 is mounted onto the mounting plate 21 for positing the welding head 26, making the positioning of the welding head 26 more convenient and accurate during installation.

The above descriptions are only preferred embodiments of the present invention and are not intended to limit the protection scope of the present invention, which is defined in the appended claims.

## Claims

1. A quick-replace device for welding head of ultrasonic metal welding machine, wherein
the quick-replace device comprises
a fixing mechanism (1) for a fixed connection to a framework and
a movable mechanism (2) for fixing an ultrasonic triplet, the ultrasonic triplet including a transducer, an amplitude modulator and a welding head,
the movable mechanism (2) being detachably mounted in the fixing mechanism (1), and comprising a mounting plate (21) and a connecting assembly (22) for fixing the ultrasonic triplet, the connecting assembly (22) being arranged on the mounting plate (21);
the fixing mechanism (1) comprising a fixing block (11) for the fixed connection to the framework,
an abutting block (4) for fixing the mounting plate (21) being mounted in the fixing block (11), and
a positioning block (14) which is detachably mounted on the fixing block (11) in a direction perpendicular to a sliding direction of the mounting plate (21) and abuts against the mounting plate (21) in a direction perpendicular to the adjusting direction of the abutting block (4), **characterized in that**
the fixing mechanism (1) comprises a mounting groove (3) being defined in the fixing block (11) with at least one side thereof being open and extending in use in a direction perpendicular to the framework, the mounting plate (21) being slidably mounted in the mounting groove (3).

2. The quick-replace device for welding head of ultrasonic metal welding machine according to claim 1, wherein
two sides of the mounting plate (21) along its sliding direction are provided with two position limiting bars (5), a first limiting groove (6) communicating with the mounting groove (3) is defined in the fixing block (11), a chamfer (7) is formed at an end of the abutting block (4) close to the mounting plate (21) and cooperates with a bottom of the mounting groove (3) to form a second limiting groove (8), and the two position limiting bars (5) are slidably mounted in the first limiting groove (6) and second limiting groove (8) along the sliding direction of the mounting plate (21), respectively.

3. The quick-replace device for welding head of ultrasonic metal welding machine according to claim 1, wherein
an end of the abutting block (4) away from the mounting plate (21) is provided with an adjusting member (9) for adjusting a position of the abutting block (4), and the fixing the adjusting member (9) is provided with a fastener (10) for fixing itself.

4. The quick-replace device for welding head of ultrasonic metal welding machine according to claim 1, wherein
a guiding groove (12) is defined in the fixing block (11), a guiding block (13) is provided on the abutting block (4), and the guide block (13) matches with the guiding groove (12)and is slidably mounted in the guiding groove (12) along an adjusting direction of the abutting block (4).

5. The quick-replace device for welding head of ultrasonic metal welding machine according to claim 1, wherein
the connecting assembly (22) comprises a clamping jaw (221) for fixing the welding head and a clamping member (222) for fixing the amplitude modulator, and the clamping member (222) is mounted on the mounting plate (21) and adjustable along an axis direction of the ultrasonic triplet.

6. The quick-replace device for welding head of ultrasonic metal welding machine according to claim 5, wherein
the clamping member (222) comprises a connecting rod (2221) and a hose clamp (2222), the connecting rod (2221) is slidably mounted on the mounting plate (21) along the axis direction of the ultrasonic triplet, the hose clamp (2222) is mounted at an end of the connecting rod (2221) away from the mounting plate (21) for fixing the amplitude modulator, and a fixture (18) for fixing the connecting rod (2221) is mounted on the mounting plate (21).

7. The quick-replace device for welding head of ultrasonic metal welding machine according to claim 6, wherein
a position limiting groove (19) is defined in the mounting plate (21) along a sliding direction of the connecting rod (2221), and the connecting rod (2221) matched with and is slidably mounted in the position limiting groove (19).

8. The quick-replace device for welding head of ultrasonic metal welding machine according to claim 1, wherein
a position plate (15) for facilitating positioning of the welding head during assembly of the welding head is provided on the mounting plate (21).

9. The quick-replace device for welding head of ultrasonic metal welding machine according to claim 8, wherein
a position limiting slot (16) is defined in a side wall of the mounting plate (21) close to the position plate (15), and a position limiting bar (17) is provided on a side wall of the position plate (15) close to the mounting plate (21), and the position limiting bar (17) matches with and is engaged in the position limiting slot (16).

10. A quick-replace method for welding head of ultrasonic metal welding machine, **characterized in that** the method is implemented by a quick-replace device for welding head of ultrasonic metal welding machine according to any one of claims 1-9, and the quick-replace method comprises the following steps:
S11, connecting a welding head (26) to be assembled to the mounting plate (21) of the movable mechanism (2);
S12, mounting the mounting plate (21) into the mounting groove (3) of the fixing block (11) of the fixing mechanism (1) along a first direction;
S13, moving the abutting block (4) along a second direction to fix the mounting plate (21) in the mounting groove (3), wherein the second direction and the first direction form an angle with each other, wherein the method further comprises:
providing a positioning block (14) and connecting the positioning block (14) to the open side of the mounting groove (3) of the fixing block (11) after step S13, so as to limit the movement of the mounting plate (21) along the fourth direction; and,
removing the positioning block (14) which is connected to the open side of the mounting groove (3) of the fixing block (11) before step S01.

11. The quick-replace method according to claim 10, wherein the method further comprises disassembling a welding head (26) to be replaced before step S11, which comprises the following steps:
S01, moving the abutting block (4) along a third direction to loosen the mounting plate (21) which is fixed in the mounting groove (3) by the abutting block (4), wherein the third direction is opposite to the second direction;
S02, withdrawing the mounting plate (21) from the mounting groove (3) along a fourth direction, wherein the fourth direction is opposite to the first direction;
S03, removing the welding head (26) to be replaced from the mounting plate (21) to which it is connected.

12. The quick-replace method according to claim 10, wherein the step S11 comprises:
providing a position plate (15) with a latching slot (27) and connecting the position plate (15) to the mounting plate (21) detachably;
docking the welding head (26) to be assembled with the latching slot (27) for positioning, so that the welding head (26) is perpendicular to the mounting plate (21);
clamping the welding head (26) through the connecting assembly (22) and moving relative to the mounting plate (21) until the connecting assembly (22) contacts with the position plate (15);
fixing the connecting assembly (22) to the mounting plate (21); and
removing the position plate (15) from the mounting plate (21).

13. The quick-replace method according to claim 10, wherein the first direction and the second direction are perpendicular to each other, and contact surfaces of the abutting block (4) and the mounting plate (21) are inclined to a certain angle with respect to the first direction and the second direction.

## Patentansprüche

1. Eine Schnellwechselvorrichtung für einen Schweißkopf einer Ultraschallmetallschweißmaschine, wobei
die Schnellwechselvorrichtung umfasst:
einen Befestigungsmechanismus (1) für eine feste Verbindung an einen Rahmen und
einen bewegbaren Mechanismus (2) zum Befestigen eines Ultraschall-Tripletts, wobei das Ultraschall-Triplett einen Wandler, einen Amplitudenschallgeber und einen Schweißkopf umfasst,
der bewegliche Mechanismus (2) lösbar in dem Befestigungsmechanismus (1) montiert ist, und eine Montageplatte (21) und eine Verbindungsbaugruppe (22) zum Befestigen des Ultraschall-Tripletts umfasst, wobei die Verbindungsbaugruppe (22) auf der Montageplatte (21) angeordnet ist;
der Befestigungsmechanismus (1) einen Befestigungsblock (11) für die feste Verbindung an dem Rahmen umfasst,
ein Anschlagblock (4) zum Befestigen der Montageplatte (21) in dem Befestigungsblock (11) montiert ist, und
ein Positionierblock (14) der lösbar auf dem Befestigungsblock (11) in einer Richtung senkrecht zu einer Gleitrichtung der Montageplatte (21) montiert ist und an der Montageplatte (21) in einer Richtung senkrecht zu der Verstellrichtung des Anschlagblocks (4) anschlägt, **dadurch gekennzeichnet, dass**
der Befestigungsmechanismus (1) eine Montagenut (3) umfasst, die in dem Befestigungsblock (11) definiert ist, wobei mindestens eine Seite davon offen ist und sich bei Verwendung in einer Richtung senkrecht zu dem Rahmen erstreckt, wobei die Montageplatte (21) gleitbar in der Montagenut (3) montiert ist.

2. Die Schnellwechselvorrichtung für einen Schweißkopf einer Ultraschallmetallschweißmaschine gemäß Anspruch 1, wobei
zwei Seiten der Montageplatte (21) entlang ihrer Gleitrichtung mit zwei positionseinschränkenden Balken (5) versehen sind, eine erste einschränkende Nut (6), die mit der Montagenut (3) in Verbindung steht, in dem ersten Befestigungsblock (11) definiert ist, eine Fase (7) an einem Ende des Anschlagblocks (4) nahe der Montageplatte (21) ausgebildet ist und mit einem Boden der Montagenut (3) zusammenwirkt, um eine zweite eingrenzende Nut (8) auszubilden, und die zwei positionseinschränkenden Balken (5) sind gleitbar in der ersten einschränkenden Nut (6) bzw. der zweiten einschränkenden Nut (8) entlang der Gleitrichtung der Montageplatte (21) montiert.

3. Die Schnellwechselvorrichtung für einen Schweißkopf einer Ultraschallmetallschweißmaschine gemäß Anspruch 1, wobei
ein Ende des Anschlagblocks (4) entfernt von der Montageplatte (21) mit einem Verstellteil (9) zum Anpassen einer Position des Anschlagblocks (4) versehen ist, und die Befestigung des Verstellteils (9) ist mit einem Befestigungselement (10) versehen, um sich selbst zu befestigen.

4. Die Schnellwechselvorrichtung für einen Schweißkopf einer Ultraschallmetallschweißmaschine gemäß Anspruch 1, wobei
eine Führungsnut (12) in dem Befestigungsblock (11) definiert ist, ein Führungsblock (13) an dem Anschlagblock (4) bereitgestellt ist, und der Führungsblock (13) zu der Führungsnut (12) passt und gleitbar in der Führungsnut (12) entlang einer Verstellrichtung des Anschlagblocks (4) montiert ist.

5. Die Schnellwechselvorrichtung für einen Schweißkopf einer Ultraschallmetallschweißmaschine gemäß Anspruch 1, wobei
die Verbindungsbaugruppe (22) eine Spannbacke (221) zum Befestigen des Schweißkopfes und ein Spannteil (222) zum Befestigen des Amplitudenschallgebers umfasst, und das Spannteil (222) ist auf der Montageplatte (21) montiert und entlang einer Achsenrichtung des Ultraschall-Tripletts verstellbar.

6. Die Schnellwechselvorrichtung für einen Schweißkopf einer Ultraschallmetallschweißmaschine gemäß Anspruch 5, wobei
das Spannteil (222) eine Verbindungsstange (2221) und eine Schlauchklemme (2222) umfasst, die Verbindungsstange (2221) gleitbar auf der Montageplatte (21) entlang der Achsenrichtung des Ultraschall-Tripletts montiert ist, die Schlauchklemme (2222) an einem Ende der Verbindungsstange (2221) entfernt von der Montageplatte (21) zum Befestigen des Amplitudenschallgebers montiert ist, und eine Befestigung (18) zum Befestigen der Verbindungsstange (2221) an der Montageplatte (21) montiert ist.

7. Die Schnellwechselvorrichtung für einen Schweißkopf einer Ultraschallmetallschweißmaschine gemäß Anspruch 6, wobei
eine positionseinschränkende Nut (19) in der Montageplatte (21) entlang einer Gleitrichtung der Verbindungsstange (2221) definiert ist und die Verbindungsstange (2221) passt zu und ist gleitbar in der positionseinschränkenden Nut (19) montiert.

8. Die Schnellwechselvorrichtung für einen Schweißkopf einer Ultraschallmetallschweißmaschine gemäß Anspruch 1, wobei
eine Positionierplatte (15) zum Vereinfachen des Positionierens des Schweißkopfes während des Zusammenbaus des Schweißkopfes an der Montageplatte (21) bereitgestellt ist.

9. Die Schnellwechselvorrichtung eines Schweißkopfes einer Ultraschallmetallschweißmaschine gemäß Anspruch 8, wobei
ein positionseinschränkender Schlitz (16) in einer Seitenwand der Montageplatte (21) nahe der Positionierplatte (15) definiert ist, und ein positionseinschränkender Balken (17) ist an einer Seitenwand der Positionierplatte (15) nahe der Montageplatte (21) bereitgestellt, und der positionseinschränkende Balken (17) passt zu und ist aufgenommen in dem positionseinschränkenden Schlitz (16).

10. Ein Schnellwechselverfahren für einen Schweißkopf einer Ultraschallmetallschweißmaschine, **dadurch gekennzeichnet, dass** das Verfahren von einer Schnellwechselvorrichtung für den Schweißkopf der Ultraschallmetallschweißmaschine gemäß einem der Ansprüche 1-9 durchgeführt wird, und das Schnellwechselverfahren umfasst die folgenden Schritte:
S11, Verbinden eine zusammenzubauenden Schweißkopfes (26) mit der Montageplatte (21) des bewegbaren Mechanismus (2)
S12, Montieren der Montageplatte (21) in der Montagenut (3) des Befestigungsblocks (11) des Befestigungsmechanismus (1) entlang einer ersten Richtung;
S13, Bewegen des Anschlagblocks (4) entlang einer zweiten Richtung, um die Montageplatte (21) in der Montagenut (3) zu befestigen, wobei die zweite Richtung und die erste Richtung miteinander einen Winkel bilden, wobei das Verfahren weiterhin umfasst:
Bereitstellen eines Positionierblocks (14) und Verbinden des Positionierblocks (14) mit der offenen Seite der Montagenut (3) des Befestigungsblocks (11) nach Schritt S13, um die Bewegung der Montageplatte (21) entlang der vierten Richtung einzuschränken; und
Entfernen des Positionierblocks (14), der mit der offenen Seite der Montagenut (3) des Befestigungsblocks (11) verbunden ist, vor Schritt S01.

11. Das Schnellwechselverfahren gemäß Anspruch 10, wobei das Verfahren des Weiteren umfasst: Auseinanderbauen eines zu ersetzenden Schweißkopfes (26) vor Schritt S11, was die folgenden Schritte umfasst:
S01, Bewegen des Anschlagblocks (4) entlang einer dritten Richtung, um die Montageplatte (21) zu lockern, die in der Montagenut (3) durch den Anschlagblock (4) befestigt ist, wobei die dritte Richtung entgegengesetzt zu der zweiten Richtung ist;
S02, Entnehmen der Montageplatte (21) aus der Montagenut (3) entlang einer vierten Richtung, wobei die vierte Richtung entgegengesetzt zu der ersten Richtung ist;
S03, Entfernen des zu ersetzenden Schweißkopfes (26) von der Montageplatte (21), mit der er verbunden ist.

12. Das Schnellwechselverfahren gemäß Anspruch 10, wobei der Schritt S11 umfasst:
Bereitstellen einer Positionierplatte (15) mit einem Verriegelungsschlitz (27) und lösbares Verbinden der Positionierplatte (15) mit der Montageplatte (21);
Andocken des zusammenzubauenden Schweißkopfes (26) an den Verriegelungsschlitz (27) zum Positionieren, sodass der Schweißkopf (26) senkrecht zu der Montageplatte (21) ist;
Klemmen des Schweißkopfes (26) durch die Verbindungsbaugruppe (22) und relatives Bewegen zu der Montageplatte (21), bis die Verbindungsbaugruppe (22) die Positionierplatte (15) berührt;
Befestigen der Verbindungsbaugruppe (22) an die Montageplatte (21); und
Entfernen der Positionierplatte (15) von der Montageplatte (21).

13. Das Schnellwechselverfahren gemäß Anspruch 10, wobei die erste Richtung und die zweite Richtung senkrecht zueinander sind, und Kontaktoberflächen des Anschlagblocks (4) und der Montageplatte (21) sind in einem bestimmen Winkel bezogen auf die erste Richtung und die zweite Richtung geneigt.

## Revendications

1. Dispositif de remplacement rapide pour tête de soudage d'une machine de soudage de métal par ultrasons, dans lequel
le dispositif de remplacement rapide comporte
un mécanisme de fixation (1) pour un raccordement fixe à un cadre et
un mécanisme mobile (2) pour fixer un triplet ultrasonore, le triplet ultrasonore incluant un transducteur, un modulateur d'amplitude et une tête de soudage,
le mécanisme mobile (2) étant monté de manière détachable dans le mécanisme de fixation (1) et comportant une plaque de montage (21) et un ensemble de raccordement (22) pour fixer le triplet ultrasonore, l'ensemble de raccordement (22) étant agencé sur la plaque de montage (21) ;
le mécanisme de fixation (1) comportant un bloc de fixation (11) pour le raccordement fixe au cadre,
un bloc de butée (4) pour fixer la plaque de montage (21) qui est montée dans le bloc de fixation (11) et
un bloc de positionnement (14) qui est monté de manière détachable sur le bloc de fixation (11) dans une direction perpendiculaire à une direction de coulissement de la plaque de montage (21) et bute contre la plaque de montage (21) dans une direction perpendiculaire à la direction d'ajustement du bloc de butée (4), **caractérisé en ce que**
le mécanisme de fixation (1) comporte une rainure de montage (3) qui est définie dans le bloc de fixation (11) avec au moins un côté de celui-ci ouvert et s'étendant en cours d'utilisation dans une direction perpendiculaire au cadre, la plaque de montage (21) étant montée de manière coulissante dans la rainure de montage (3).

2. Dispositif de remplacement rapide pour tête de soudage d'une machine de soudage de métal par ultrasons selon la revendication 1, dans lequel
deux côtés de la plaque de montage (21) le long de sa direction de coulissement sont prévus avec deux barres de limitation de position (5), une première rainure de limitation (6) communiquant avec la rainure de montage (3) est définie dans le bloc de fixation (11), un chanfrein (7) est formé au niveau d'une extrémité du bloc de butée (4) à proximité de la plaque de montage (21) et coopère avec un fond de la rainure de montage (3) pour former une seconde rainure de limitation (8) et les deux barres de limitation de position (5) sont montées de manière coulissante respectivement dans la première rainure de limitation (6) et la seconde rainure de limitation (8) le long de la direction de coulissement de la plaque de montage (21).

3. Dispositif de remplacement rapide pour tête de soudage d'une machine de soudage de métal par ultrasons selon la revendication 1, dans lequel
une extrémité du bloc de butée (4) éloignée de la plaque de montage (21) est prévue avec un élément d'ajustement (9) pour ajuster une position du bloc de butée (4) et la fixation de l'élément d'ajustement (9) est prévue avec un organe de fixation (10) pour se fixer elle-même.

4. Dispositif de remplacement rapide pour tête de soudage d'une machine de soudage de métal par ultrasons selon la revendication 1, dans lequel
une rainure de guidage (12) est définie dans le bloc de fixation (11), un bloc de guidage (13) est prévu sur le bloc de butée (4) et le bloc de guidage (13) correspond à la rainure de guidage (12) et est monté de manière coulissante dans la rainure de guidage (12) le long d'une direction d'ajustement du bloc de butée (4).

5. Dispositif de remplacement rapide pour tête de soudage d'une machine de soudage de métal par ultrasons selon la revendication 1, dans lequel
l'ensemble de raccordement (22) comporte une mâchoire de serrage (221) pour fixer la tête de soudage et un élément de serrage (222) pour fixer le modulateur d'amplitude et l'élément de serrage (222) est monté sur la plaque de montage (21) et est ajustable le long d'une direction d'axe du triplet ultrasonore.

6. Dispositif de remplacement rapide pour tête de soudage d'une machine de soudage de métal par ultrasons selon la revendication 5, dans lequel
l'élément de serrage (222) comporte une tige de liaison (2221) et une pince de tuyau (2222), la tige de liaison (2221) est montée de manière coulissante sur la plaque de montage (21) le long de la direction d'axe du triplet ultrasonore, la pince de tuyau (2222) est montée au niveau d'une extrémité de la tige de liaison (2221) à l'écart de la plaque de montage (21) pour fixer le modulateur d'amplitude et un bâti (18) pour fixer la tige de liaison (2221) est monté sur la plaque de montage (21).

7. Dispositif de remplacement rapide pour tête de soudage d'une machine de soudage de métal par ultrasons selon la revendication 6, dans lequel
une rainure de limitation de position (19) est définie dans la plaque de montage (21) le long d'une direction de coulissement de la tige de liaison (2221) et la tige de liaison (2221) mise en correspondance et est montée de manière coulissante dans la rainure de limitation de position (19).

8. Dispositif de remplacement rapide pour tête de soudage d'une machine de soudage de métal par ultrasons selon la revendication 1, dans lequel
une plaque de position (15) pour faciliter le positionnement de la tête de soudage lors de l'assemblage de la tête de soudage est prévue sur la plaque de montage (21).

9. Dispositif de remplacement rapide pour tête de soudage d'une machine de soudage de métal par ultrasons selon la revendication 8, dans lequel
une fente de limitation de position (16) est définie dans une paroi latérale de la plaque de montage (21) proche de la plaque de position (15) et une barre de limitation de position (17) est prévue sur une paroi latérale de la plaque de position (15) proche de la plaque de montage (21) et la barre de limitation de position (17) correspond à la fente de limitation de position (16) et est en prise dans celle-ci.

10. Procédé de remplacement rapide pour tête de soudage d'une machine de soudage de métal par ultrasons, **caractérisé en ce que** le procédé est mis en œuvre par un dispositif de remplacement rapide pour tête de soudage d'une machine de soudage de métal par ultrasons selon l'une quelconque des revendications 1 à 9 et le procédé de remplacement rapide comporte les étapes suivantes :
S11, raccordement d'une tête de soudage (26) à assembler à la plaque de montage (21) du mécanisme mobile (2) ;
S12, montage de la plaque de montage (21) dans la rainure de montage (3) du bloc de fixation (11) du mécanisme de fixation (1) le long d'une première direction ;
S13, déplacement du bloc de butée (4) le long d'une deuxième direction pour fixer la plaque de montage (21) dans la rainure de montage (3), dans lequel la deuxième direction et la première direction forment un angle l'une par rapport à l'autre, dans lequel le procédé comporte en outre :
la fourniture d'un bloc de positionnement (14) et le raccordement du bloc de positionnement (14) au côté ouvert de la rainure de montage (3) du bloc de fixation (11) après l'étape S13, de manière à limiter le déplacement de la plaque de montage (21) le long d'une quatrième direction ; et
le retrait du bloc de positionnement (14) qui est raccordé au côté ouvert de la rainure de montage (3) du bloc de fixation (11) avant l'étape S01.

11. Procédé de remplacement rapide selon la revendication 10, dans lequel le procédé comporte en outre le démontage d'une tête de soudage (26) à remplacer avant l'étape S11, qui comporte les étapes suivantes :
S01, déplacement du bloc de butée (4) le long d'une troisième direction pour desserrer la plaque de montage (21) qui est fixée dans la rainure de montage (3) par le bloc de butée (4), dans lequel la troisième direction est opposée à la deuxième direction ;
S02, retrait de la plaque de montage (21) à partir de la rainure de montage (3) le long d'une quatrième direction, dans lequel la quatrième direction est opposée à la première direction ;
S03, retrait de la tête de soudage (26) à remplacer à partir de la plaque de montage (21) à laquelle elle est raccordée.

12. Procédé de remplacement rapide selon la revendication 10, dans lequel l'étape S11 comporte :
la fourniture d'une plaque de position (15) avec une fente de verrouillage (27) et le raccordement de la plaque de position (15) à la plaque de montage (21) de manière détachable ;
l'ancrage de la tête de soudage (26) à assembler avec la fente de verrouillage (27) pour le positionnement, de sorte que la tête de soudage (26) soit perpendiculaire à la plaque de montage (21) ;
le serrage de la tête de soudage (26) à travers l'ensemble de raccordement (22) et le déplacement par rapport à la plaque de montage (21) jusqu'à ce que l'ensemble de raccordement (22) entre en contact avec la plaque de position (15) ;
la fixation de l'ensemble de raccordement (22) à la plaque de montage (21) ; et
le retrait de la plaque de position (15) à partir de la plaque de montage (21).

13. Procédé de remplacement rapide selon la revendication 10, dans lequel la première direction et la deuxième direction sont perpendiculaires l'une à l'autre et des surfaces de contact du bloc de butée (4) et de la plaque de montage (21) sont inclinées à un certain angle par rapport à la première direction et à la deuxième direction.
